# FASCICULE DE BREVET EUROPEEN

(11) **EP 2 076 110 B1**
(45) Date de publication et mention de la délivrance du brevet: **30.01.2013**
(21) Numéro de dépôt: 07803224.0
(22) Date de dépôt: 04.09.2007
(51) Int. Cl.: A01B 35/18

(54) **MACHINE ARATOIRE**
KREISELEGGE MIT SCHAR
PLOUGHING MACHINE

(30) Priorité: 04.09.2006 FR 0607734
(43) Date de publication de la demande: 08.07.2009
(73) Titulaire: Etablissement Barre S.A.S., F-47320 Clairac (FR); Barre, Andrè, 47320 Clairac (FR)
(72) Inventeur: BARRE, André, F-47320 Clairac (FR)
(74) Mandataire: Ravina, Bernard
(86) Numéro de dépôt international: PCT/EP2007/059260
(87) Numéro de publication internationale: WO 2008/028920

(56) Documents cités:
- EP-A- 0 286 096
- DE-A1- 3 326 236
- FR-A- 2 832 203
- FR-A1- 2 607 350
- FR-A1- 2 755 343
- US-A- 3 760 882

## Description

### Domaine technique

La présente invention est du domaine des matériels utilisés en agriculture en vue du labour des sols. Plus particulièrement la présente invention se rapporte à une machine aratoire, du type tracté, apte à préparer les sols notamment à ameublir le sol en surface et à le fissurer en profondeur tout en limitant l'importance de la semelle de labour.

### État de la technique antérieure

On connaît divers types de machines pour le labour des sols. Ainsi on connaît des charrues avec lesquelles le sol est retourné sillons par sillons. Ces charrues sont équipées de socs et/ou de disques rotatifs aptes à pénétrer dans le sol et à ouvrir des sillons par retournement de la terre.

On connaît aussi des machines équipées de rotors de labour rotatif autour d'un axe transversal à la direction d'avancement. Ces rotors de labours sont constitués d'un arbre rotatif dans des paliers, auquel sont fixées de manière radiale des dents de travail du sol. Une telle machine est apte à ameublir le sol en surface sur quelques centimètres et à assurer un mélange de la matière organique et de la terre à ce niveau.

On connaît aussi des machines équipées de dents de travail du sol de formes hélicoïdales ou cintrées latéralement, plus ou moins élastiques aptes à pénétrer dans le sol et à le fissurer tant en surface qu'en profondeur. De telles machines et dents de travail de la terre sont notamment connues des brevets FR-A-2 353 212, FR-A-2 610 165, FR-A-2 643 537, FR-A-2 680 442 et FR-A-2 687 275.

On connaît de la demande de brevet EP-A-286096 un engin aratoire comprenant sur un même châssis au moins une dent fixe avec un soc de travail de la terre et au-dessus de ce soc, un rotor de labour, rotatif selon un axe vertical apte à ameublir la terre soulevée par le soc de la dent fixe. Cette dent ne réalise aucune fissuration en profondeur du sol

On connaît de la demande de brevet DE-A-33 26 236 une machine aratoire pourvue de dents de dents de travail de la terre montées de manière fixe sur le châssis de la machine. Le châssis de la machine porte un rotor horizontal avec dents monté au-dessus et à distance de la partie active des dents fixe. Enfin la machine comporte à l'arrière avec d'un rotor de travail de la terre, à axe de rotation horizontal, doté de dents de travail radiales. A l'arrière cette machine comporte un rouleau « Packer ».

On connaît aussi de la demande FR-A-2 607 350 un instrument combiné de broyage et de défrichage, de décompactage et de travail du sol.
Cet instrument comprend un châssis sur lequel sont montés des dents fixes et des dents agencées en rotor, portées par un arbre tournant horizontal. Ces dents attaquent la terre soulevée par les dents fixes. Cet instrument comporte en arrière un rouleau de terrage.

### Exposé de l'invention

### Problème technique

La technique du labourage par retournement de la terre présente l'inconvénient d'enfouir la matière organique à trop grande profondeur alors que cette dernière doit rester au voisinage de la surface afin d'y être décomposée dans des conditions optimales pour former la couche d'humus indispensable à la fertilité des sols. D'autres inconvénients de cette technique sont la formation d'une semelle de labour s'opposant à une bonne pénétration de l'eau et la remontée en surface des pierres se trouvant en profondeur.

La technique de labourage par ameublissement superficiel du sol à l'aide de dents rotatives conduit en la formation d'une semelle de labour. Cette semelle de labour, comme on le sait s'oppose au développement racinaire et à la pénétration de l'eau dans le sol qui stagne alors à faible profondeur.

La technique de labourage par fissuration du sol présente l'avantage sur les techniques précédentes de maintenir la matière organique en surface, et de faciliter la pénétration de l'eau dans le sol grâce à la fissuration de ce dernier. En revanche cette technique ne permet l'obtention d'un ameublissement du sol en surface et un mélange des couches à ce niveau.

En définitive aucune des machines et techniques antérieures de labour telles qu'exposées ne peut assurer simultanément une fissuration en profondeur du sol et un ameublissement du sol en surface et ce sans formation de semelles de labour. De surcroît, ces machines et techniques connues n'assurent pas l'enfouissement des herbacées, des talons de récoltes et des déchets organiques présents en surface de sorte que des opérations supplémentaires en vue du nettoyage du sol seront nécessaires tant pour éviter la constitution d'un milieu favorable au développement des nuisibles tels que limaces et autres, que pour permettre la préparation des lits de semences, lesquels doivent être exempt de tout déchet pouvant s'opposer ou nuire à un ensemencement mécanique.

S'agissant des herbacées, les opérations de nettoyage peuvent notamment consister en des traitements chimiques toujours coûteux et polluants.

Enfin, aucune des machines de l'art antérieur ne résout les problèmes de bourrage du rotor par accumulation de mottes de terre et autres entre les dents fixes et le rotor pouvant conduire au blocage de ce dernier.

### Solution technique

La présente invention a pour objet de pallier les inconvénients précédemment cités en mettant en oeuvre une machine aratoire apte simultanément :
- à fissurer le sol en profondeur sans formation de semelle de labour, et
- à ameublir le sol en surface sans formation de semelle de labour.

Un second objet de la présente invention est une machine qui soit apte simultanément
- à fissurer le sol en profondeur sans formation de semelle de labour,
- à ameublir le sol en surface sans formation de semelle de labour,
- à enfouir la matière organique à faible profondeur et,
- à former au-dessus de cet enfouissement un lit de semence par ameublissement de la couche supérieure du sol.

À cet effet la machine aratoire selon la présente invention, comportant un châssis destiné à être attelé aux trois points arrières d'un véhicule tracteur comprenant:
- au moins une dent aratoire d'une première espèce, comportant une partie inférieure active apte à pénétrer le sol et à le soulever sous l'effet du mouvement d'avance,
- au moins une dent aratoire d'une seconde espèce, montée en rotation à écartement de la partie active de la dent de la première espèce et selon un niveau de hauteur supérieur par rapport à celui de la partie active de la dent de la première espèce, ladite dent de la seconde espèce étant apte à pénétrer dans la partie soulevée du sol en vue de l'ameublir et ce avant que ladite partie soulevée ne retombe sur le sol,
   se caractérise essentiellement en ce que :
- elle comprend plusieurs dents de la première espèce organisées selon au moins une rangée disposée transversalement à la direction d'avancement de la machine,
- elle comprend plusieurs dents de la seconde espèce fixées de manière radiale à un même arbre d'entraînement, horizontal, monté en rotation sur des paliers solidaires du châssis, ledit arbre étant accouplé à un moyen moteur d'entraînement en rotation et le rotor formé par les dites dents et l'arbre d'entraînement est disposé au-dessus et à écartement des parties actives des dents,

- les dents de la seconde espèce sont organisées sur le rotor selon au moins un groupe fonctionnel, les dents de ce groupe étant régulièrement réparties selon des rayons d'un même cercle,
- les dents de la seconde espèce sont organisées sur le rotor selon plusieurs groupes équidistants et les dents de la première espèce sont disposées en regard des intervalles entre les groupes de dents de la seconde espèce,
- chaque dent de la première espèce est portée par un bras et est montée de manière mobile entre une position de dégagement selon laquelle elle est disposée au dessus du sol et une position active selon laquelle elle est disposée, par sa partie active sous et à écartement de l'axe de rotation de chaque dent de la seconde espèce,
- chaque dent de la première espèce est montée en articulation dans son bras, que ce bras est solidarisé par une articulation à un longeron supérieur du châssis, que chaque dent de la première espèce reçoit en articulation un élément de traction solidarisé par une articulation à un longeron inférieur du châssis, qu'une jambe de force est solidarisée d'une part au bras et d'autre part au châssis pour notamment maintenir la dent de la première espèce en position de travail.

Les dents de la première espèce ont pour effet, en soulevant le sol de créer une vague de terre dont la partie supérieure (celle se situant au-dessus du niveau du sol) se trouve happée par les dents rotatives de la seconde espèce. Ces dents rotatives pénètrent la vague de terre et sous l'effet de sa rotation divise cette vague. Il est certain que du fait de leur rotation, les dents de la seconde espèce peuvent générer une semelle de labour, mais cette semelle de labour se rompra lorsque la vague de terre retombera au sol.

Selon une caractéristique additionnelle de la présente invention, les dents de la première espèce sont des dents de fissuration du sol ; ces dents sont aptes à fissurer le sol en profondeur sans le retourner. De telles dents connues de l'état de la technique comportent généralement une âme longiforme apte à se déformer élastiquement tant en flexion et torsion et une pointe montée en extrémité inférieure de l'âme, pouvant être associée à une ou plusieurs ailettes latérales. Du fait de l'élasticité de la l'âme, la pointe de la dent décrit dans la terre au moins des mouvements de lacet, de pilonnement et d'embardée sous l'effet desquels la terre est amenée à se fissurer et ce tant au-dessous qu'au-dessus de la dent jusqu'à la surface du sol. La semelle de labour que peut créer la dent est faible et est limitée à la largeur de la pointe. Il y a lieu de préciser que cette semelle de labour lorsqu'elle existe, est traversée par les fissures crées par la dent.

Les fissures formées dans le sol du fait de l'action de chaque dent de la première espèce s'étendent sensiblement verticalement dans le sol depuis la surface. Les fissures réalisées ont pour effet de faciliter l'écoulement de l'eau dans le sol, depuis la surface et de permettre l'aération de ce dernier. Par ailleurs du fait de la présence de ces nombreuses fissures, le sol se trouve dans un état décompacté.

Ces différentes caractéristiques font que le sol se trouve dans un état propice au bon développement racinaire des plantes.

La disposition d'entraînement en rotation des dents de la seconde espèce par un moyen moteur, permet d'affranchir la vitesse de rotation de chaque dent de la seconde espèce de la vitesse d'avance de la machine et de communiquer aux dents une puissance mécanique suffisante pour diviser la vague de terre aussi finement que possible. Une telle disposition offre aussi la possibilité d'ajuster la vitesse de rotation des dents et d'adapter cette vitesse de rotation au degré de friabilité du terrain à labourer et au degré d'émiettement désiré.

Les éléments de traction associés aux dents de la première espèce constituent un écran s'opposant à l'accumulation de terre entre les dents de la première espèce et le rotor portant les dents de la seconde espèce.

Pour accroître la vitesse relative de pénétration des dents de la seconde espèce dans la vague de terre, sans pour autant accroître leur vitesse de rotation, les dites dents, selon un autre aspect de l'invention, sont entraînée en rotation selon un sens dit en opposition. Selon ce sens de rotation, chaque dent, en considérant sa position en prise avec la vague de terre, avance dans le sens du labourage. En d'autres termes le sens de rotation de la dent est l'inverse du sens de rotation des roues du véhicule tracteur auquel est attelée la machine. En variante, les dents de la seconde espèce seront entraînées en rotation selon un sens inverse dit en avalant.

Selon une autre caractéristique de l'invention, chaque dent de la seconde espèce est dotée d'une forme de palette pour projeter la terre émiettée vers l'arrière. Une telle disposition conduit à assurer une séparation mécanique entre les éléments lourds et les éléments légers de l'émiettement, les éléments lourds retombant sur le sol à plus faible distance de la dent que les éléments plus légers.

Grâce à cette disposition, les éléments lourds tels que pierres, mottes de terre non divisées, talons de culture, mottes herbeuses et autres déchets végétaux lourds et éléments grossiers se trouveront recouvert par les éléments légers ces derniers constituant au dessus des éléments lourds une couche de terre relativement fine pouvant être utilisée sans traitement additionnel en tant que lit de semence.

Pour renforcer encore cet effet, la machine, selon une autre de ces caractéristiques, comporte au moins un moyen de tamis installé en arrière des dents de la seconde espèce, sur la trajectoire de la terre projetée par cette dent ou par sa palette, afin de tamiser la terre projetée.

Ainsi les éléments grossiers tels que mottes, pierres, résidus végétaux et autres seront stoppés dans leur progression vers l'arrière par le moyen de tamis et se déposeront sur la vague de terre, en avant dudit moyen de tamis. En revanche, la terre tamisée viendra en se déposant sur le sol recouvrir les éléments grossiers stoppés par le moyen de tamis.

Selon encore une autre caractéristique de l'invention, la profondeur de pénétration dans le sol de la ou des dents de la première espèce est ajustable.

Selon encore une autre caractéristique de l'invention, la hauteur de l'axe de rotation des dents de la seconde espèce, par rapport à la partie active de la ou des dents de la première espèce est ajustable.

Selon une autre caractéristique de l'invention le moyen de tamis est constitué par au moins une grille disposée verticalement en arrière de la ou des dents de la seconde espèce, cette grille étant constituée essentiellement par des barreaux disposés coplanairement à équidistance, fixés par leur partie supérieure à au moins un longeron support.

Selon une autre caractéristique de l'invention, chaque barreau de la grille est élastiquement flexible.

Selon une autre caractéristique de l'invention, la machine est dotée d'un rouleau de tassement installé à l'arrière et apte à venir tasser la couche de matière tamisée, ce rouleau de tassement étant solidarisé à deux bras parallèles du châssis.

Enfin selon une autre caractéristique de l'invention, le rotor sur lequel sont installées les dents de la seconde espèce est monté dans une structure porteuse solidarisée au châssis de la machine par des biellettes d'articulation, la dite structure porteuse étant dotée de deux pattes d'appui prenant appui sur les deux bras parallèles du rouleau de tassement.

### Avantages de l'invention

Avec une telle machine, le sol ne présente aucune semelle de labour en raison du fait que les dents de la première espèce fissurent le sol tant au-dessus qu'au-dessous de leurs pointes et que les dents de la seconde espèce n'attaquent que la partie du sol soulevée par les dents de la première espèce.

Le sol après labourage avec une telle machine présente une granulométrie pyramidale. En effet, la partie inférieure du sol est simplement fissurée sans cavité et recouverte par tous les éléments grossiers tels que déchets organiques, cailloux, mottes etc. Cette couche d'éléments grossiers se trouve recouverte par une couche de terre fine pouvant former, sans traitement additionnel, un lit de semence.

La pyramide granulométrique obtenue, permet un passage plus facile de l'eau et de l'air. De plus cette configuration facilite ou favorise le développent racinaire des plantes cultivées.

Enfin le maintien d'une couche de déchets organiques à faible distance de la surface du sol favorise la biodégradation et par voie de conséquence la formation de l'humus nécessaire à la fertilisation du sol.

Un autre avantage de la machine selon l'invention est qu'elle requiert moins de puissance tractrice pour assurer le labourage. Il en résulte une économie significative d'énergie.

### Description sommaire des figures des dessins

D'autres avantages, buts et caractéristiques de l'invention apparaîtront à la lecture de la description d'une forme préférée de réalisation, donnée à titre d'exemple non limitatif, en se référant aux dessins annexés en lesquels :
- la figure 1 est une vue en perspective d'une machine selon l'invention, les dents de la seconde espèce étant représentées par leurs trajectoires,

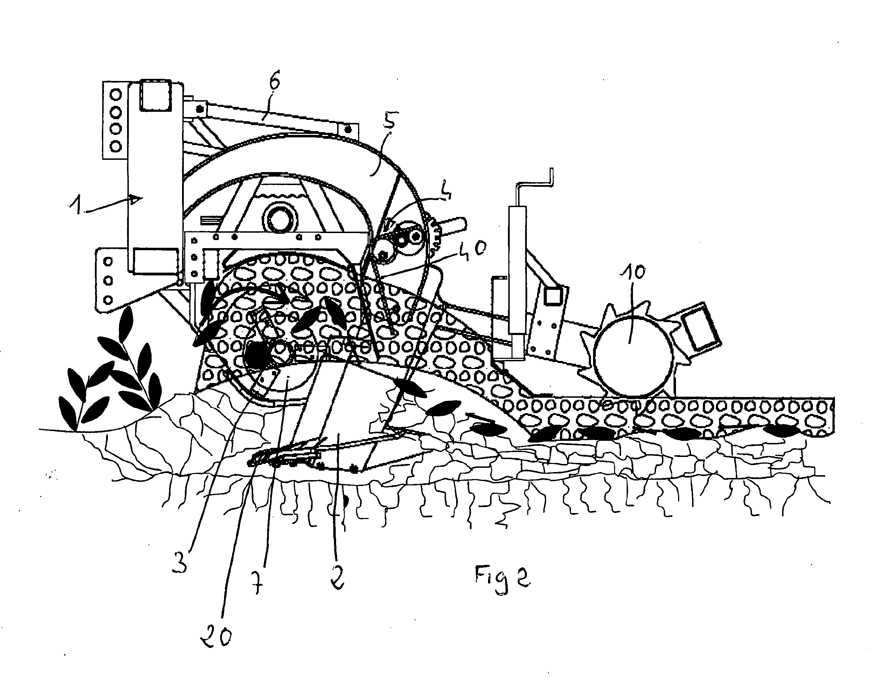

- la figure 2 est une vue en coupe longitudinale de la machine en situation de travail du sol,

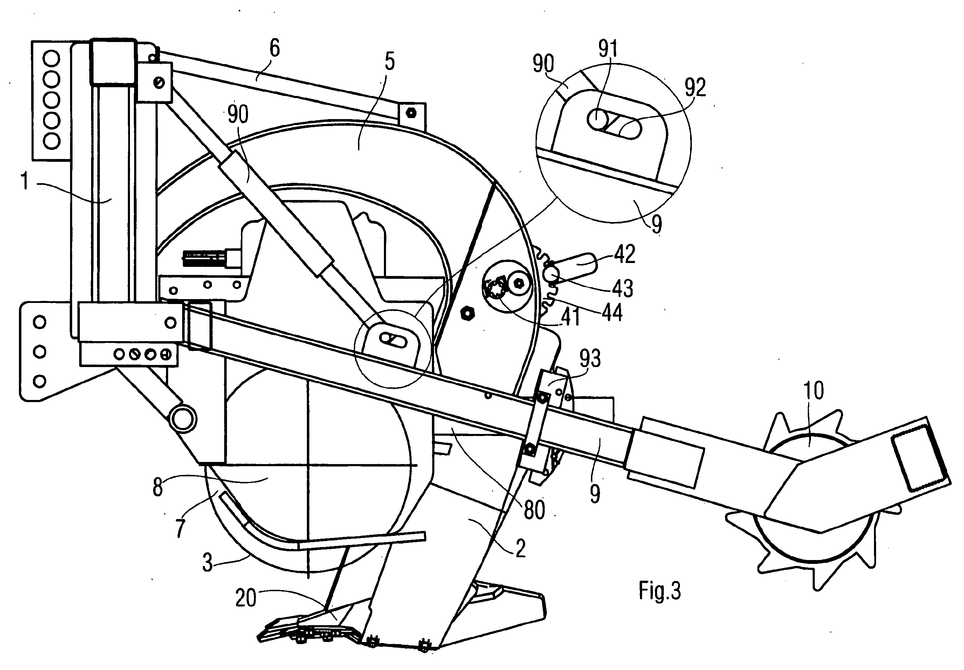

- la figure 3 est une vue de côté de la machine selon l'invention, les dents de la seconde espèce étant représentées par leur trajectoire,

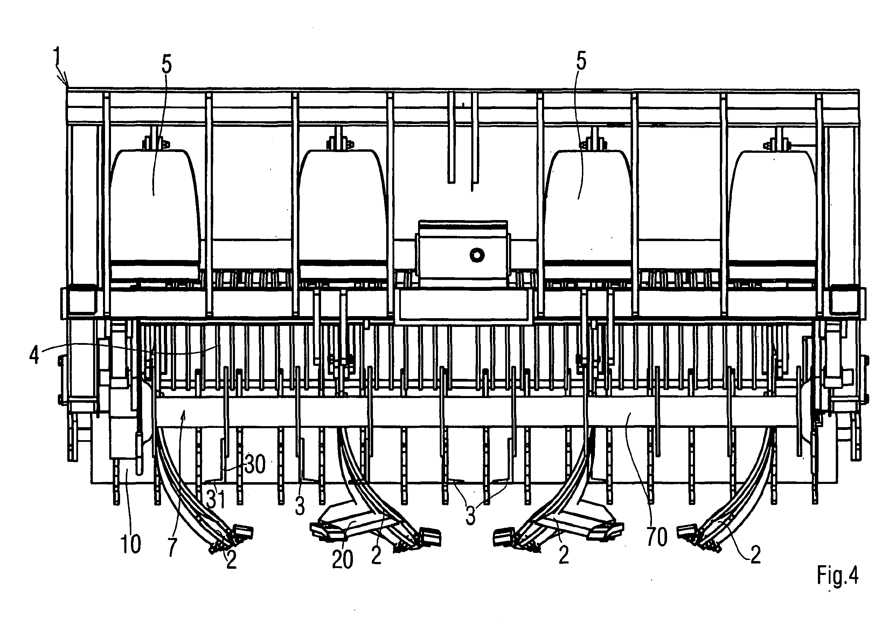

- la figure 4 est une vue de face de la machine selon l'invention, seules quelques dents de la seconde espèce sont représentées sur cette vue,

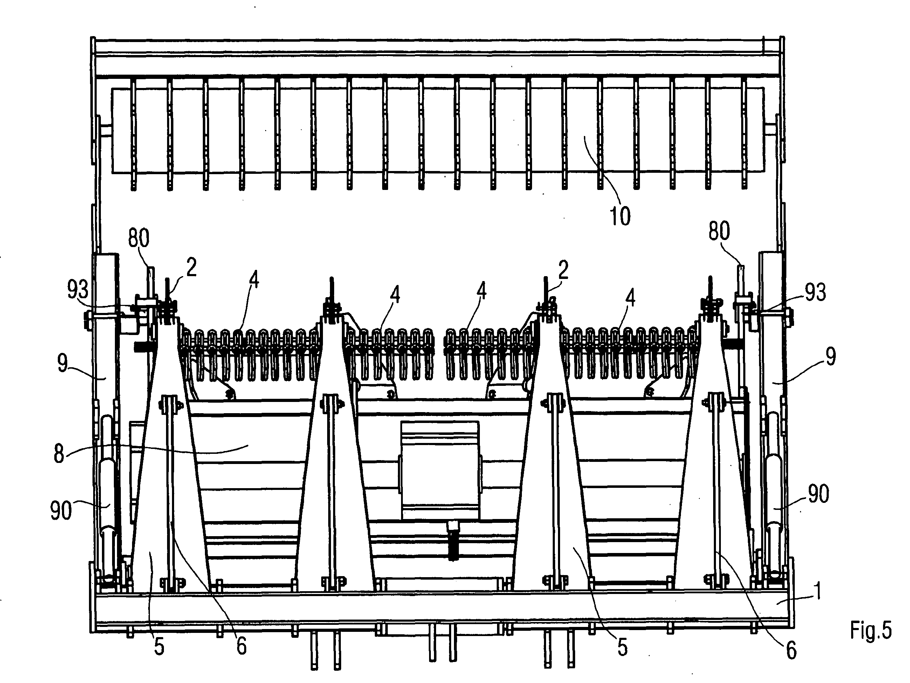

- la figure 5 est une vue de dessus de la machine selon l'invention,
- les figures 6 et 7 sont des vues en perspective avant et arrière d'une variante d'exécution du montage d'une dent de la première espèce,
- la figure 8 est une vue en coupe montrant de manière schématique le montage d'un organe de fixation à l'attelage trois points du véhicule tracteur,
- la figure 9 est une vue schématique illustrant un mode de commande de l'inclinaison des dents de la première espèce.

### Meilleure manière de réaliser l'invention

Telle que représentée la machine aratoire selon l'invention comprend un châssis métallique 1 comportant des organes de fixation à **l'attelage** trois points arrières d'un véhicule tracteur. Sur ce châssis sont installés :
- au moins une dent aratoire 2 d'une première espèce, comportant une partie inférieure active 20 apte à pénétrer le sol et à le fissurer et le soulever sous l'effet du mouvement d'avance de la machine, ce qui forme une vague de terre,
- au moins une dent aratoire 3 d'une seconde espèce, entraînée en rotation préférentiellement selon un axe horizontal transversal à la direction d'avancement, à écartement de la partie active de la dent 2 de la première espèce et selon un niveau de hauteur supérieur par rapport à celui de la partie active de la dent de la première espèce, ladite dent de la seconde espèce 3 étant apte à pénétrer dans la partie soulevée du sol en vue de l'ameublir et étant dotée d'une forme de palette latérale 30 pour projeter vers l'arrière, la terre divisée,
- au moins un moyen de tamis 4 installé en arrière de la dent 3 de la seconde espèce, contre lequel la dent de la seconde espèce projette la terre divisée, ce moyen de tamis étant apte à tamiser la terre projetée par la dent de la seconde espèce.

Le châssis 1, constitué par assemblage de longerons métalliques tubulaires 100a, 100b, horizontaux, parallèles, transversaux à la direction de déplacement de la machine et de traverses tubulaires 100c, métalliques, verticales. Ces longerons et traverses forment à l'avant de la machine un cadre vertical se développant de manière transversale à la direction d'avancement de cette dernière. Ce cadre vertical est pourvu de trois organes de fixation aux trois points arrière du véhicule tracteur, à savoir un organe de fixation supérieur 101 fixé au longeron supérieur 100a et deux organes de fixation inférieur 102 fixés au longeron inférieur 100b. Au longeron inférieur 100b du cadre avant est solidarisé au moins un bras support 5 recevant en fixation à distance dudit longeron la dent 2 de la première espèce. Préférentiellement le bras support 5 est solidarisé au cadre avant du châssis 1 par une articulation présentant un axe d'articulation horizontal, parallèle audit cadre.

La dent 2 de la première espèce est fixée par sa partie supérieure à l'extrémité libre du bras support 5. Comme on peut le voir, le bras support 5 présente un profil d'égale résistance. Ainsi on remarque que ses largeur et épaisseur diminuent progressivement depuis l'axe d'articulation vers son extrémité libre. Avantageusement le bras 5 est agencé en caisson.

On remarquera que la dent 2 de la première espèce, par son extrémité avant, est positionnée en avant d'un axe géométrique vertical sécant à l'axe de rotation de la dent de la seconde espèce 3. L'écart entre l'extrémité avant de la dent 2 de la première espèce et l'axe vertical précité pourra être ajustable. On conçoit que de la valeur de cet écart va dépendre la position par rapport à la dent 3 de la seconde espèce, de la partie de terre soulevée ou vague de terre.

Pour assurer le maintien de la dent 2 en position de travail est prévu une jambe de force 6, longiforme solidaire d'une part du longeron supérieur du cadre que comporte le châssis et d'autre part du bras support 5.

Avantageusement, la jambe de force 6 est liée au bras support 5 par l'intermédiaire d'un élément de sécurité, du genre goupille de cisaillement ou autre afin que des efforts trop important de résistance à l'avancement exercé sur la dent 2 de la première espèce se traduise par le cisaillement de l'élément de sécurité, la libération du bras support 5 et par voie de conséquence le dégagement de la dent de la première espèce.

Selon une autre forme de réalisation, la jambe de force 6 est constituée par un vérin hydraulique double effet articulé par son corps au longeron supérieur du cadre du châssis et par sa tige au bras pivotant. À ce vérin hydraulique est associé un circuit hydraulique approprié par l'intermédiaire duquel sera commandé le déploiement de la tige du vérin par alimentation de la chambre arrière de ce dernier ou le retrait de cette tige par alimentation de la chambre avant du vérin. Au circuit hydraulique du vérin et plus particulièrement à la conduite d'alimentation de la chambre arrière dudit vérin sera associé un limiteur de pression ou à un accumulateur pneumatique apte à connecter à la bâche la chambre arrière du vérin si la pression dans cette dernière devient égale ou supérieure à une valeur prédéterminée.

Par la commande du vérin hydraulique il sera possible aussi de disposer et maintenir la dent 2 de la première espèce soit en position de travail soit en position inactive. Selon cette position inactive, la dent 2 est relevée et se situe au-dessus du sol.

Avantageusement sont prévues plusieurs dents 2 de la première espèce organisées selon une rangée transversale à la direction d'avancement de la machine. Préférentiellement, cette rangée est perpendiculaire à la direction d'avancement de la machine. Chaque dent 2 est montée sur un bras 5 qui lui est propre, ce bras 5 étant solidarisé à une jambe de force 6 qui lui est propre.

Avantageusement chaque dent 2 de la première espèce comporte une âme dotée en partie supérieure de perçages traversants de fixation au bras 5. La partie inférieure de l'âme de la dent est incurvée latéralement et reçoit au moins une lame porte-outil portant une pointe et un coutre ou bien un soc ces éléments constituant la partie active 20 de la dent. Des exemples de dents du type précité sont notamment décrits dans les brevets FR 2 680 442 et FR 2 687 275. L'âme de la dent est formée par une lame d'épaisseur constante, cette âme étant élastiquement déformable. Cette lame peut élastiquement se déformer en torsion, elle peut également se déformer dans le sens du déploiement du cintre qu'elle forme. De ces déformations élastiques qui se produisent en cours d'avancement de la dent dans la terre, il en résulte une fissuration du sol et un soulèvement de ce dernier sous la forme d'une vague de terre.

Avantageusement, sont prévues plusieurs dents 3 de la seconde espèce fixées de manière radiale à un même arbre d'entraînement horizontal 70, transversal à la direction d'avancement de la machine, monté sur des paliers de guidage en rotation. Préférentiellement, l'arbre d'entraînement 70 est perpendiculaire à la direction d'avancement de la machine. L'arbre d'entraînement 70 et les dents 3 forment un rotor 7 de travail de la terre disposé au-dessus et à écartement des parties actives 20 des dents 2. L'arbre 70 du rotor 7 est accouplé à un organe moteur et est entraîné en rotation par cet organe moteur selon un axe géométrique transversal à la direction d'avancement de la machine, cet axe géométrique étant préférentiellement perpendiculaire à la direction d'avancement de la machine.

Selon la forme préférée de réalisation, les dents 3 de la seconde espèce sont organisées sur l'arbre 70 du rotor 7 selon au moins un groupe fonctionnel, les dents 3 de ce groupe étant régulièrement réparties selon des rayons d'un même cercle.

Toujours selon la forme préférée de réalisation, le rotor 7 sera équipé plusieurs groupes fonctionnels de dent 3 de la seconde espèce lesquels sont organisés sur l'arbre 70 du rotor de manière équidistante. Avec une telle disposition les dents 2 de la première espèce seront disposées en regard des intervalles entre les groupes de dents 3 de la seconde espèce.

Préférentiellement chaque dent 3 de la seconde espèce présente un talon de fixation 30 à l'arbre du rotor 7 et une partie coudée 31 s'étendant latéralement au talon 30 et formant palette. Le talon 30 et la partie coudée 31 présentent un bord avivé d'attaque de la terre.

Sous l'effet de la rotation du rotor 7, qui s'effectue préférentiellement dans un sens contraire au sens de rotation des roues du véhicule tracteur, les dents 3 de la seconde espèce pénètrent dans la vague de terre formée par l'action de soulèvement imprimée à la terre par les dents 2 de la première espèce et disloquent et divisent cette forme de vague. Par leur palette 31, les dents 3 au cours de leur évolution au-dessus de l'axe géométrique de rotation du rotor 7, projettent la terre divisée vers le moyen de tamisage 4 installé en arrière.

Selon la forme préférée de réalisation, les deux paliers de l'arbre 70 du rotor 7 sont fixés à une structure porteuse 8 du châssis de la machine. Cette structure porteuse 8 comprend deux flasques verticaux parallèles réunis l'un à l'autre par des longerons d'entretoisement. Les flasques portent de manière connue les deux paliers support de l'arbre 70 du rotor 7.

À la structure porteuse 8 est fixé de toute manière connue le moteur d'entraînement de l'arbre 70 du rotor. Ce moteur d'entraînement, du type hydraulique, est alimenté en huile sous pression par l'intermédiaire d'une centrale hydraulique comportant une pompe hydraulique dont le rotor est adapté à être accouplé à la prise de force du véhicule tracteur. La centrale hydraulique sera montée sur la structure porteuse 8.

Pour permettre le relevage des dents 2 de la première espèce malgré la présence du rotor 7 et de sa structure porteuse 8, les bras support 5 de ces dents forment chacun un coude et s'étendent au dessus et en arrière de ce rotor et de sa structure porteuse 8.

Avantageusement la structure porteuse 8 du rotor 7 est solidarisée au châssis 1 par une première biellette articulée d'une part au longeron supérieur du cadre avant du châssis et d'autre part à un portique rigidement fixé à l'un des éléments d'entretoisement que comporte la structure porteuse. Cette structure porteuse 8 est également solidarisée au châssis par deux biellettes inférieures, distantes l'une de l'autre, articulées chacune d'une part au longeron inférieur du cadre avant du châssis 1 et d'autre part à un autre élément d'entretoisement de la structure porteuse 8. Les axes d'articulation de ces différentes biellettes tant au châssis 1 qu'à la structure porteuse 8 sont horizontaux et parallèles.

En outre, la structure porteuse 8 par deux pattes latérales 80 prend appui sur deux bras parallèle 9 du châssis. Ces bras s'étendant depuis l'avant vers l'arrière de la machine et reçoivent en fixation deux paliers support de l'axe d'un rouleau de tassement horizontal 10 prévu pour venir tasser le lit de semence formé par la machine.

Selon la forme préférée de réalisation, la position en hauteur de la structure porteuse 8 est réglable afin d'ajuster le degré de pénétration du rotor 7 dans la vague de terre formée par les dents de la première espèce. À cet effet le point d'appui de chaque patte latérale 80 sur le bras 9 correspondant est ajustable en hauteur. Dans la forme préférée de réalisation, la patte latérale s'engage dans une chape 93 que comporte le bras 9 et prend appui sur un axe engagé dans deux perçages traversants alignés selon un axe horizontal et formés respectivement dans les ailes de la chape. Chaque aile de la chape sera dotée d'une série de perçages traversants alignés selon un axe vertical, les perçages de chaque aile étant respectivement alignés avec les perçages de l'autre aile.

Préférentiellement, les deux bras support 9 sont articulés par leur extrémité avant au cadre avant du châssis. En raison de cette disposition, le rouleau de tassement 10 sera toujours en appui sur le sol.

Il est cependant nécessaire que ce rouleau 10 puisse être soulevé du sol lors du relevage de la machine à l'aide du trois points arrière. Pour cette raison à chaque bras support 9 est solidarisée une barre de traction 90 elle même solidarisée au cadre avant du châssis 1 de la machine. Cette disposition peut interdire, lorsque la machine est en position de travail de la terre, un contact permanent du rouleau de tassement avec le sol. Pour écarter ce risque les bras 9 possèdent une latitude de basculement limité autour de l'axe de leur articulation au cadre avant du châssis 1.

A cet effet, chaque barre de traction 90, d'une part est articulée au cadre avant du châssis 1 par son extrémité avant et d'autre part porte à son extrémité arrière un coulisseau 91 engagé à coulissement dans une lumière oblongue 92 formée dans le bras correspondant 9 ou dans les ailes d'une chape fixée à ce dernier.

Selon une disposition avantageuse de l'invention, la longueur de chaque barre de traction 90 est ajustable. Cette disposition, en modifiant la position angulaire des deux bras support 9 par rapport à l'horizontale, permet d'ajuster la hauteur de la trajectoire de l'extrémité des dents 3 de la seconde espèce, par rapport à la partie active des dents de la première espèce 2.

Le moyen de tamis 4 est avantageusement constitué par une grille installée en arrière des dents de la seconde espèce sur la trajectoire de la terre projetée par ces dents.

Cette grille est essentiellement constituée par des barreaux coplanaires 40 équidistants, portés par au moins un longeron 41 horizontal préférentiellement fixé aux bras support 5 des dents 2 de la première espèce. Dans la mesure où chaque bras support 5 et la dent 2 qu'il porte peuvent être relevés indépendamment des autres, la grille 4 de tamisage est constituée par plusieurs tronçons de grille respectivement portés par les différents bras support des dents. En position de travail des dents 2 de la première espèce, les différents tronçons de grille sont en relation de coplanarité. Chaque tronçon de grille est donc constitué par un tronçon de longeron et par des barreaux fixés à ce tronçon de longeron.

Préférentiellement chaque barreau 40 de la grille est élastiquement flexible. Grâce à cette disposition le barreau pourra, par déformation élastique, s'effacer devant un obstacle et reprendre sa configuration une fois l'obstacle franchi.

Avantageusement, l'inclinaison de chaque tronçon de la grille 4 par rapport à l'horizontale est réglable afin d'ajuster les possibilités d'effacement des barreaux à l'état du sol. Il y a lieu de noter que les tronçons sont réglables en inclinaison indépendamment les uns des autres.

Dans la forme préférée de réalisation, le tronçon de longeron 41 de chaque tronçon de grille est monté en rotation dans un palier ménagé dans le bras 5 correspondant et sa position angulaire est ajustable. A cet effet, à ce tronçon de longeron est fixée une poignée 42 dotée d'un doigt mobile d'indexation 43 apte à venir sous l'effet de l'action d'un organe élastique, se loger dans un des crans d'indexation pratiquée dans une platine d'indexation 44 portée par le bras support 5.

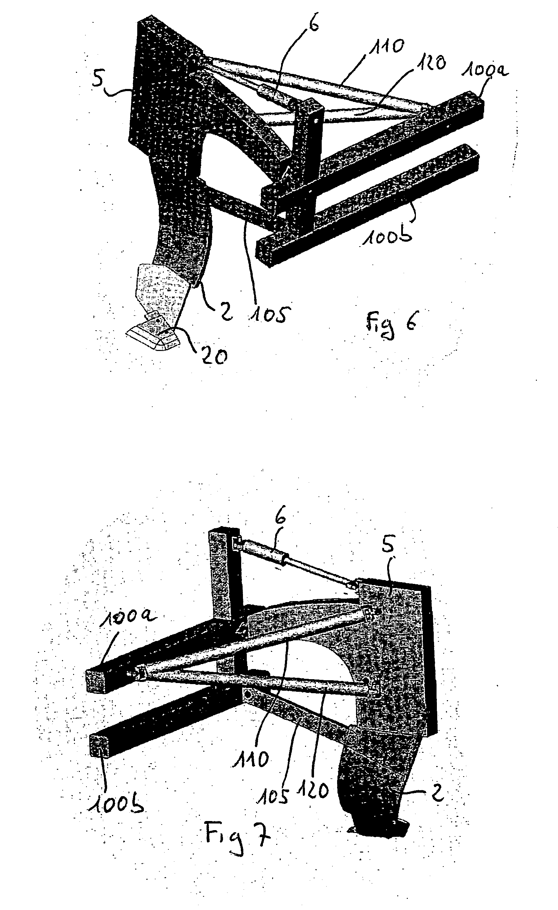

En figure 6 est représentée de manière schématique une variante de réalisation de la machine selon l'invention. Selon cette forme d'exécution, chaque dent 2 de la première espèce est montée en articulation dans son bras 5 autour d'un axe horizontal, ce bras 5 étant solidarisé par une articulation au longeron supérieur 100a du châssis. En outre chaque dent 2 de la première espèce reçoit en articulation un élément de traction 105 solidarisé par une articulation au longeron inférieur 100b du châssis, une jambe de force 6, étant toujours solidarisée d'une part au bras 5 et d'autre part au châssis 1 pour notamment maintenir la dent 2 de la première espèce en position de travail.

Cette disposition d'élément de traction 105 permet de reporter directement sur le longeron inférieur 100b du châssis, et par voie de conséquence sur les deux points arrière inférieurs de l'attelage trois points du tracteur, une partie des efforts encaissés par la dent.

Avantageusement l'élément de traction est situé au-dessus de l'arbre 70 du rotor 7 entre des dents 3 de ce dernier.

Cette disposition présente l'avantage de constituer un écran s'opposant à l'accumulation de mottes de terre entre la dent 2 et le rotor 7, génératrice d'effets de bourrage pouvant bloquer la rotation du rotor 7.

Comme précédemment, la jambe de force 6 peut être associée à un élément de sécurité du genre goupille de cisaillement. Toujours comme précédemment la jambe de force 6 peut être constituée par un vérin hydraulique double effet associé à un circuit hydraulique approprié.

Le vérin peut être du type simple et selon cette forme de réalisation, est prévu un dispositif de réglage et de limitation de la profondeur de travail de la dent, associé au vérin 6. Ce dispositif de limitation est avantageusement constitué par une chaîne à maillons fixée d'une part au châssis et d'autre part au bras 5. L'intérêt d'une telle solution réside dans le fait qu'elle autorise le relevage du bras.

Selon la forme préférée de réalisation, l'articulation de l'élément de traction 105 à la dent 2 et au châssis 1, l'articulation de la dent 2 au bras 5 et l'articulation du bras 5 au châssis 1 sont organisées selon les sommets d'un quadrilatère déformable. De préférence se quadrilatère sera constitué par un parallélogramme. Cette disposition de parallélogramme permet de conserver à la dent la même orientation quel que soit sa profondeur de travail.

Selon une disposition particulièrement avantageuse de l'invention, le bras 5, l'élément de traction 105, et la jambe de force 6 sont articulés au châssis 1 chacune par une rotule et le bras 5 est solidarisé au châssis par deux jambes de forces latérales 110, 120, agencées en triangle, lesdites jambes de force convergeant l'une vers l'autre et vers le châssis et étant de longueur ajustable. Ces jambes de force sont solidarisées chacune par une première rotule au bras 5 et par une seconde rotule au châssis 1, cette seconde rotule étant commune aux deux jambes de force 110, 120 et étant constituée de deux rotules jumelées. On peut remarquer que le triangle que forme ces deux jambes de force 110, 120 est substantiellement vertical et que les deux jambes de force 110, 120 sont solidarisées par la rotule commune au longeron supérieur 100a du châssis. On peut remarquer aussi que l'une des jambes de force, la jambe 110, occupe une position supérieure par rapport à la jambe de force 120 et que la rotule de liaison de cette dernière au bras 5 est en fait fixée à l'axe d'articulation de la dent 2 à ce bras 5.

Ces dispositions d'articulation par rotule et de jambes de force latérales 110, 120 permettent de disposer et de maintenir la dent 2 dans une position angulaire déterminée par rapport aux longerons 100a, 100b du châssis, la dent 2 pourra ainsi être disposée de manière perpendiculaire ou bien oblique par rapport à ces longerons. Par ailleurs les deux organes de fixation inférieurs 102 sont individuellement réglables en position le long d'un axe perpendiculaire aux longerons du châssis. Il est donc possible par réglage de la position des deux organes de fixation 102 d'incliner la machine vers la droite ou la gauche par rapport à sa direction d'avancement. Dans cette position la rangée de dents de la première espèce 2 et le rotor 7 ne sont plus perpendiculaires à la direction d'avancement mais obliques tandis que les dents de la première espèce, en raison de l'orientation qui leur a été donnée par modification de la longueur des jambes de force latérales 110, 120, pourront être disposées dans la direction d'avancement de la machine. De cette manière, la machine pourra être placée dans une configuration d'attaque progressive de la terre.

Selon la forme préférée de réalisation, l'élément de traction 105 est constitué par une barre rigide mais en variante, cet élément de traction pourra être constitué par une chaîne à maillons, un câble ou autre lien souple et résistant.

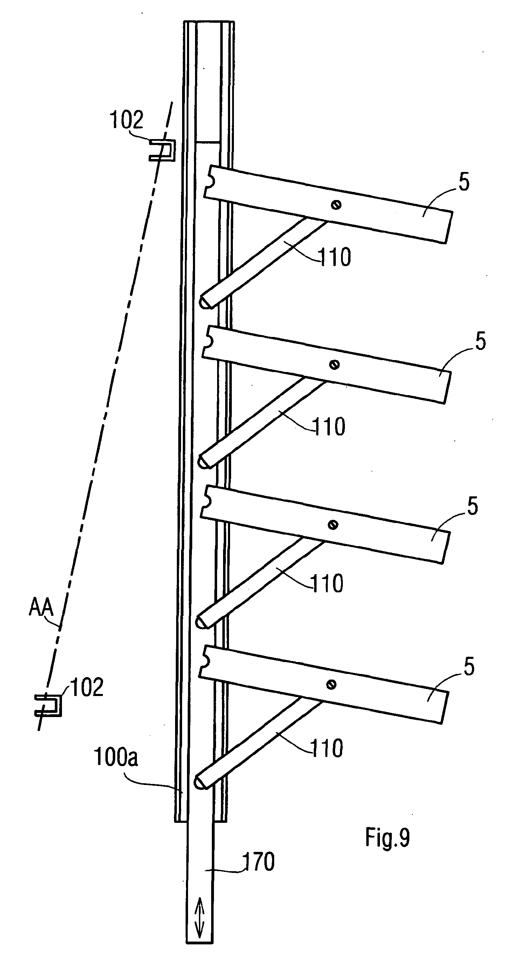

Selon une variante d'exécution, telle que représentée en figure 9, les jambes de force latérales 110, 120 sont de longueur invariable et la position de leur rotule commune est réglable en position le long du longeron supérieur 100a. Avec une telle disposition, les différentes rotules communes, c'est à dire jumelées, pourront être solidarisées à une même barre de commande 170, horizontale, montée de manière coulissante le long du longeron 100a, et solidarisée à un organe moteur (non représenté) assurant son déplacement le long dudit longeron 100a dans un sens ou dans l'autre afin de pouvoir incliner les dents soit vers la gauche, soit vers la droite. Cette barre de commande 170 est guidée par des portées de guidage que comporte le longeron 100a. L'organe moteur sera constitué par un vérin hydraulique double effet associé à un circuit hydraulique approprié, vérin comportant un limiteur de course.

Avantageusement l'organe moteur d'actionnement de la barre de commande 170 et l'organe moteur 160 d'actionnement des organes 102 sont associés l'un à l'autre de façon que l'activation de l'un entraîne l'activation de l'autre et que le déplacement des organes 102 et l'inclinaison d'un axe géométrique horizontal AA passant par ces organes 102 s'accompagne d'un mouvement d'inclinaison des bras 5 tel que ces derniers et le dit axe demeurent de préférence perpendiculaires les uns aux autres.

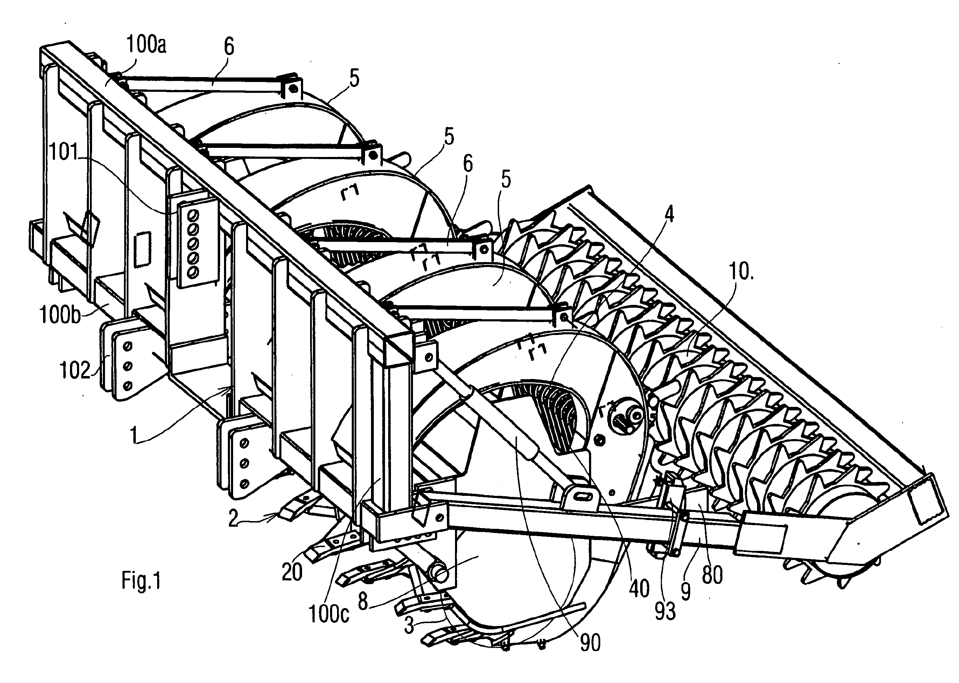

Avantageusement, le soc 20 de chaque dent 2 est fixé de manière amovible sur un support de soc fixé rigidement sur la partie inférieure de l'âme de la dent. Pour un travail profond le soc 20 présentera un contour rectangulaire comme on peut le voir notamment en figure 1. Pour un travail à faible profondeur, l'ordre par exemple de 10 à 25 cm, le soc présentera un contour de forme trapézoïdale. Il présentera ainsi un bord avant frontal avivé prolongé par un bord oblique latéral également avivé. Cette disposition de soc, combinée éventuellement à une inclinaison appropriée de la dent permettra d'obtenir une largeur de soulèvement de terre comparable à celle que celle donnée par une dent travaillant en profondeur. Grâce à cette forme de soc est évitée l'ajout de dent 2 supplémentaires.

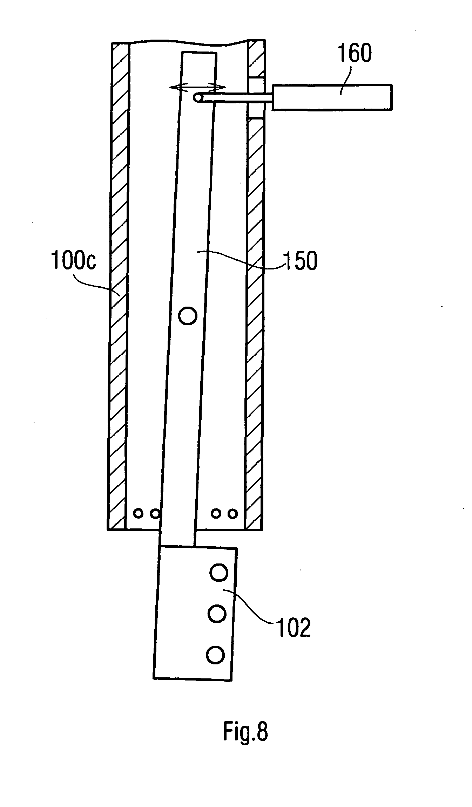

Selon la forme préférée de réalisation, (fig.8) chaque organe de fixation inférieur 102 est porté par une monture 150 constituée par un levier basculant 150 articulé au châssis, ce levier étant associé à un organe moteur du type vérin hydraulique double effet 160. Ce levier basculant pourra être monté en articulation dans l'une des traverses 100c du châssis 1. La monture pourra être repoussée par le vérin contre un axe introduit dans la traverse 100c.

À la machine telle que décrite pourra être attelé un semoir ainsi que tout autre instrument agricole.

## Revendications

1. Machine aratoire comportant un châssis 1 destiné à être attelé aux trois points arrières d'un véhicule tracteur comprenant:
- au moins une dent aratoire (2) d'une première espèce, comportant une partie inférieure active (20) apte à pénétrer le sol et à le soulever sous l'effet du mouvement d'avance,
- au moins une dent aratoire (3) d'une seconde espèce, montée en rotation à écartement de la partie active de la dent de la première espèce et selon un niveau de hauteur supérieur par rapport à celui de la partie active (20) de la dent (2) de la première espèce, ladite dent (3) de la seconde espèce étant apte à pénétrer dans la partie soulevée du sol en vue de l'ameublir et ce avant que ladite partie soulevée ne retombe sur le sol, **caractérisée en ce que** :
- elle comprend plusieurs dents (2) de la première espèce organisées selon au moins une rangée disposée transversalement à la direction d'avancement de la machine,
- elle comprend plusieurs dents (3) de la seconde espèce fixées de manière radiale à un même arbre d'entraînement (70), horizontal, monté en rotation sur des paliers solidaires du châssis, ledit arbre étant accouplé à un moyen moteur d'entraînement en rotation et le rotor (7) formé par les dites dents et l'arbre d'entraînement (70) est disposé au-dessus et à écartement des parties actives (20) des dents (2),
- les dents (3) de la seconde espèce sont organisées sur le rotor (7) selon au moins un groupe fonctionnel, les dents de ce groupe étant régulièrement réparties selon des rayons d'un même cercle,
- les dents (3) de la seconde espèce sont organisées sur le rotor (7) selon plusieurs groupes équidistants et les dents de la première espèce sont disposées en regard des intervalles entre les groupes de dents de la seconde espèce,
- chaque dent (2) de la première espèce est portée par un bras (5) et est montée de manière mobile entre une position de dégagement selon laquelle elle est disposée au dessus du sol et une position active selon laquelle elle est disposée, par sa partie active (20) sous et à écartement de l'axe de rotation de chaque dent (3) de la seconde espèce,
- chaque dent (2) de la première espèce est montée en articulation dans son bras (5), que ce bras est solidarisé par une articulation à un longeron supérieur (100a) du châssis, que chaque dent (2) de la première espèce reçoit en articulation un élément de traction (105) solidarisé par une articulation à un longeron inférieur (100b) du châssis, qu'une jambe de force (6) est solidarisée d'une part au bras (5) et d'autre part au châssis (1) pour notamment maintenir la dent (2) de la première espèce en position de travail.

2. Machine aratoire selon la revendication 1, **caractérisée en ce que** la dent de la première espèce (2) est une dent de fissuration du sol, apte à fissurer le sol sans le retourner.

3. Machine aratoire selon la revendication 1, **caractérisée en ce que** les dents (3) de la seconde espèce sont entraînées en rotation selon un sens dit en opposition, que chaque dent (3) de la seconde espèce est dotée d'une forme de palette latérale (31) pour projeter vers l'arrière la terre divisée et qu'elle comporte au moins un moyen de tamis (4) installé en arrière des dents de la seconde espèce, sur la trajectoire de la terre projetée par ces dents, afin de tamiser la terre projetée.

4. Machine aratoire selon l'une quelconque des revendications précédentes, **caractérisée en ce que** la profondeur de pénétration dans le sol des dents (2) de la première espèce est ajustable et que la hauteur de l'axe de rotation des dents (3) de la seconde espèce, par rapport à la partie active (20) des dents de la première espèce est ajustable.

5. Machine selon l'une quelconque des revendications précédentes, **caractérisée par** un rouleau de tassement (10) installé à l'arrière apte à venir tasser la couche de terre tamisée, que ce rouleau de tassement (10) est solidarisé à deux bras parallèles (9) solidaires du châssis 1 et que le rotor (7) sur lequel sont installées les dents (3) de la seconde espèce est monté dans une structure porteuse (8) solidarisée au châssis 1 par des biellettes d'articulation, la dite structure porteuse étant dotée de deux pattes d'appui (80) prenant appui sur les deux bras parallèles (9), le point d'appui de chaque patte latérale (80) sur le bras (9) correspondant est ajustable en hauteur.

6. Machine selon la revendication 1, **caractérisée en ce que** l'élément de traction (105) est situé au-dessus de l'arbre (70) du rotor (7) entre les dents (3) de ce dernier.

7. Machine selon la revendication 1 ou la revendication précédente, **caractérisée en ce que** les articulations de l'élément de traction (105) à la dent (2) et au châssis, l'articulation de la dent (2) à son bras (5) et l'articulation de du bras (5) au châssis sont organisés selon les sommets d'un quadrilatère déformable.

8. Machine selon l'une quelconque des revendications 1 ou 6 ou 7, **caractérisée en ce que** la jambe de force (6) est constituée par un vérin hydraulique simple effet et qu'elle est associée à un dispositif de réglage et de limitation de la profondeur de travail de la dent (2) de la première espèce.

9. Machine selon l'une quelconque des revendications 1 ou 6 à 8, **caractérisée en ce que** le bras (5), l'élément de traction (105), et la jambe de force (6) sont articulées au châssis (1) chacune par une rotule et que le bras (5) est solidarisé au châssis par deux jambes de forces latérales (110, 120), agencées en triangle, lesdites jambes de force convergeant l'une vers l'autre et vers le châssis.

10. Machine selon la revendication précédente, dont les longerons (100a), (100b) du châssis 1 comportent trois organes de fixation (101), (102), à l'attelage trois points arrière d'un véhicule tracteur, à savoir un organe supérieur (101) et deux organes inférieurs (102), **caractérisée en ce que** les deux organes de fixation inférieurs (102) sont réglables en position le long d'un axe perpendiculaire aux longerons du châssis.

11. Machine selon la revendication 9 ou la revendication 10, **caractérisée en ce que** les jambes de force latérales (110, 120) sont de longueur ajustable.

12. Machine selon la revendication 10 **caractérisée en ce que** les jambes de force latérales (110), (120) sont de longueur invariable et que la position de leur rotule commune est réglable en position le long du longeron supérieur (100a).

13. Machine selon la revendication précédente, **caractérisée en ce que** les différentes rotules communes sont solidarisées à une même barre de commande (170), horizontale, montée de manière coulissante le long du longeron (100a), et solidarisée à un organe moteur d'actionnement assurant son déplacement le long dudit longeron (100a) dans un sens ou dans l'autre afin de pouvoir incliner les dents soit vers la gauche, soit vers la droite.

14. Machine selon la revendication précédente, **caractérisée en ce que** l'organe moteur d'actionnement de la barre de commande (170) et l'organe moteur (160) d'actionnement des organes (102) sont associés l'un à l'autre de façon que l'activation de l'un entraîne l'activation de l'autre et que le déplacement des organes (102) et l'inclinaison d'un axe géométrique AA passant par ces organes (102) s'accompagne d'un mouvement d'inclinaison des bras (5) tel que ces derniers et le dit axe demeurent perpendiculaires les uns aux autres.

15. Machine selon l'une quelconque des revendications précédentes, **caractérisée en ce que** la partie active (20) de la dent de la première espèce est un soc de contour de forme trapézoïdale et que ce soc présente un bord avant frontal avivé prolongé par un bord oblique latéral avivé.

## Claims

1. A ploughing machine comprising a chassis 1 intended to be coupled to three rear points of a tractor vehicle, comprising:
- at least one ploughing tooth (2) of a first kind, comprising an active bottom part (20) able to penetrate the soil and to lift it under the effect of a forward movement,
- at least one ploughing tooth (3) of a second kind, mounted for rotation with separation from the active part of the tooth of the first kind and at a height level greater than that of the active part (20) of the tooth (2) of the first kind, said tooth (3) of the second kind being able to penetrate the lifted part of the soil with a view to loosening it, before said lifted part falls to the ground again,
**characterised in that**:
- it comprises several teeth (2) of the first kind organised in at least one row arranged transversely to the direction of forward travel of the machine,
- it comprises several teeth (3) of the second kind fixed radially to the same horizontal drive shaft (70) mounted for rotation on bearings secured to the chassis, said shaft being coupled to a motor means for driving in rotation and the rotor (7) formed by said teeth and the drive shaft (70) is placed above and separate from the active parts (20) of the teeth (2),
- the teeth (3) of the second kind are organised on the rotor (7) in at least one functional group, the teeth in this group being regularly distributed on radii of the same circle,
- the teeth (3) of the second kind are organised on the rotor (7) in several equidistant groups and the teeth of the first kind are placed opposite the gaps between the groups of teeth of the second kind,
- each tooth (2) of the first kind is carried by an arm (5) and is mounted so as to be able to move between a disengagement position in which it is placed above the ground and an active position in which it is placed, through its active part (20), under and separate from the rotation axis of each tooth (3) of the second kind,
- each tooth (2) of the first kind is mounted for articulation in its arm (5), **in that** this arm is secured by an articulation to an upper longitudinal member (100a) of the chassis, **in that** each tooth (2) of the first kind receives with articulation a traction element (105) secured by an articulation to a lower longitudinal member (100b) of the chassis, **in that** a strut (6) is secured on the one hand to the arm (5) and on the other hand to the chassis (1) in order in particular to hold the tooth (2) of the first kind in the working position.

2. A ploughing machine according to claim 1, **characterised in that** the tooth of the first kind (2) is a tooth for cracking the soil, able to crack the soil without turning it over.

3. A ploughing machine according to claim 1, **characterised in that** the teeth (3) of the second kind are rotated in a so-called opposition direction, **in that** each tooth (3) of the second kind is provided with a lateral blade shape (31) in order to project the divided earth towards the rear, and **in that** it comprises at least one sieve means (4) installed behind the teeth of the second kind, on the path of the earth projected by these teeth, in order to sieve the projected earth.

4. A ploughing machine according to any one of the preceding claims, **characterised in that** the depth of penetration in the soil of the teeth (2) of the first kind is adjustable and **in that** the height of the rotation axis of the teeth (3) of the second kind, with respect to the active part (20) of the teeth of the first kind, is adjustable.

5. A machine according to any one of the preceding claims, **characterised by** a flattening roller (10) installed at the rear, able to flatten the layer of sieved earth, in that this flattening roller (10) is secured to two parallel arms (9) secured to the chassis 1, and in that the rotor (7) on which the teeth (3) of the second kind are installed is mounted in a carrier structure (8) secured to the chassis 1 by articulation links, said carrier structure being provided with two bearing lugs (80) bearing on the two parallel arms (9), the bearing point of each lateral lug (80) on the corresponding arm (9) is adjustable for height.

6. A machine according to claim 1, **characterised in that** the traction element (105) is situated above the shaft (70) of the rotor (7) between the teeth (3) of the latter.

7. A machine according to claim 1 or the preceding claim, **characterised in that** the articulations of the traction element (105) on the tooth (2) and on the chassis, the articulation of the tooth (2) on its arm (5) and the articulation of the arm (5) on the chassis are organised according to the vertices of a deformable quadrilateral.

8. A machine according to any one of claims 1 or 6 or 7, **characterised in that** the strut (6) comprises a single-acting hydraulic jack and **in that** it is associated with a device for adjusting and limiting the working depth of the tooth (2) of the first kind.

9. A machine according to any one of claims 1 or 6 to 8, **characterised in that** the arm (5), the traction element (105) and the strut (6) are articulated on the chassis (1) each by a swivel and **in that** the arm (5) is secured to the chassis by two lateral struts (110, 120) arranged in a triangle, said struts converging towards each other and towards the chassis.

10. A machine according to the preceding claim, wherein the longitudinal members (100a), (100b) of the chassis 1 comprise three members (101), (102) for fixing to the rear three-point coupling of a tractor vehicle, namely a top member (101) and two bottom members (102), **characterised in that** the two bottom fixing members (102) are adjustable for position along an axis perpendicular to the longitudinal members of the chassis.

11. A machine according to claim 9 or claim 10, **characterised in that** the lateral struts (110, 120) have an adjustable length.

12. A machine according to claim 10, **characterised in that** the lateral struts (110), (120) are of invariable length and **in that** the position of their common swivel is adjustable for position along the top longitudinal member (100a).

13. A machine according to the aforementioned claim, **characterised in that** the various common swivels are secured to the same horizontal control bar (170) mounted so as to be able to slide along the longitudinal member (100a) and secured to an actuation motor member providing its movement along said longitudinal member (100a) in one direction or the other so as to be able to incline the teeth either to the left or to the right.

14. A machine according to the preceding claim, **characterised in that** the motor member actuating the control bar (170) and the motor member (160) actuating the members (102) are associated with each other so that activation of one causes activation of the other and so that the movement of the members (102) and the inclination of a geometric axis AA passing through these members (102) is accompanied by an inclination movement of the arms (5) such that the latter and said axis remain perpendicular to each other.

15. A machine according to any one of the preceding claims, **characterised in that** the active part (20) of the tooth of the first kind is a ploughshare with a contour with a trapezoidal shape and **in that** this ploughshare has a sharpened front leading edge extended by a sharpened lateral oblique edge.

## Patentansprüche

1. Maschine zur Bearbeitung landwirtschaftlich genutzter Böden umfassend einen Rahmen 1 zum Ankoppeln an drei rückseitige Befestigungspunkte eines Zugfahrzeugs, umfassend:
- mindestens eine Bodenbearbeitungszinke (2) einer ersten Art, umfassend einen unteren aktiven Bereich (20) zum Durchdringen den Bodens und zu dessen Anhebung unter Wirkung der Vorwärtsbewegung,
- mindestens eine Bodenbearbeitungszinke (3) einer zweiten Art, welche drehbar in einem Abstand zum aktiven Bereich der Zinke der ersten Art und auf einem höheren Niveau als dem Niveau des aktiven Bereichs (20) der Zinke (2) der ersten Art angebracht ist, wobei die Zinke der zweiten Art (3) in den angehobenen Bodenabschnitt eindringen kann, um diesen aufzulockern, und zwar bevor der angehobene Bodenabschnitt wieder auf den Boden zurückfällt,
**dadurch gekennzeichnet, dass**:
- sie mehrere Zinken (2) der ersten Art umfasst, welche entlang mindestens einer quer zur Fortbewegungsrichtung der Maschine angeordneten Reihe eingerichtet sind,
- sie mehrere Zinken (3) der zweiten Art umfasst, welche radial an einer und derselben horizontalen Antriebswelle (70) befestigt sind, welche drehbar an mit dem Rahmen fest verbundenen Lagern angebracht ist, wobei die Welle mit einer rotatorisch antreibenden Motoreinrichtung gekoppelt ist und der durch die Zinken und die Antriebswelle (70) gebildete Rotor (7) oberhalb und in einem Abstand zu den aktiven Bereichen (20) der Zinken (2) angeordnet ist,
- die Zinken der zweiten Art (3) auf dem Rotor (7) entsprechend mindestens einer funktionellen Gruppe eingerichtet sind, wobei die Zinken dieser Gruppe gleichmäßig entlang der Radien eines und desselben Kreises verteilt sind.
- die Zinken der zweiten Art (3) auf dem Rotor (7) entsprechend mehrerer äquidistanter Gruppen eingerichtet sind und die Zinken der ersten Art gegenüber den Zwischenräumen zwischen den Gruppen von Zinken der zweiten Art angeordnet sind,
- jede Zinke (2) der ersten Art durch einen Arm (5) gehalten ist und beweglich zwischen einer ausgerückten Stellung, in der sie über dem Boden angeordnet ist, und einer aktiven Position, in der sie mit ihrem aktiven Bereich (20) unterhalb und in einem Abstand zu der Drehachse jeder Zinke (3) der zweiten Art angeordnet ist, gelagert ist,
- jede Zinke (2) der ersten Art in ihrem Arm (5) angelenkt ist, dass dieser Arm über ein Gelenk mit einem oberen Längsträger (100a) des Rahmens fest verbunden ist, dass jede Zinke (2) der ersten Art ein Zugelement (105) gelenkig aufnimmt, welches über ein Gelenk mit einem unteren Längsträger (100b) des Rahmens fest verbunden ist, und dass eine Haltestrebe (6) einerseits mit dem Arm (5) und andererseits mit dem Rahmen (1) fest verbunden ist, um insbesondere die Zinke (2) der ersten Art in Arbeitsposition zu halten.

2. Maschine zur Bearbeitung landwirtschaftlich genutzter Böden nach Anspruch 1, **dadurch gekennzeichnet, dass** die Zinke (2) der ersten Art eine Zinke zur Bodenaufspaltung ist und es ermöglicht, den Boden aufzuspalten, ohne ihn zu wenden.

3. Maschine zur Bearbeitung landwirtschaftlich genutzter Böden nach Anspruch 1, **dadurch gekennzeichnet, dass** die Zinken (3) der zweiten Art in einer so genannten Gegenrichtung rotatorisch angetrieben werden, dass jede der Zinken (3) der zweiten Art mit einer seitlichen Plattenform (31) versehen ist, um die aufgeteilte Erde nach hinten auszuwerfen, und dass sie mindestens eine Siebeinrichtung (4) umfasst, die hinter den Zinken der zweiten Art in der Wurfbahn der durch diese Zinken ausgeworfenen Erde angebracht ist, um die ausgeworfene Erde zu sieben.

4. Maschine zur Bearbeitung landwirtschaftlich genutzter Böden nach einem der vorstehenden Ansprüche, **dadurch gekennzeichnet, dass** die Bodeneindringtiefe der Zinken (2) der ersten Art einstellbar ist und dass die Höhe der Drehachse der Zinken (3) der zweiten Art im Verhältnis zum aktiven Bereich (20) der Zinken der ersten Art einstellbar ist.

5. Maschine nach einem der vorstehenden Ansprüche, **gekennzeichnet durch** eine rückseitig angebrachte Verdichtungswalze (10) zum Verdichten der Schicht gesiebter Erde und **dadurch**, dass die Verdichtungswalze (10) mit zwei parallelen Armen (9) fest verbunden ist, welche mit dem Rahmen 1 fest verbunden sind, und dass der Rotor (7), auf dem die Zinken (3) der zweiten Art angebracht sind, in einer Tragstruktur (8) gelagert ist, die mit dem Rahmen 1 über Gelenkstangen fest verbunden ist, wobei die Tragstruktur mit zwei Stützplatten (80) versehen ist, welche sich an den zwei parallelen Armen (9) abstützen, wobei der Abstützpunkt jeder seitlichen Platte (80) an dem entsprechenden Arm (9) höhenmäßig einstellbar ist.

6. Maschine nach Anspruch 1, **dadurch gekennzeichnet, dass** das Zugelement (105) oberhalb der Welle (70) des Rotors (7) zwischen dessen Zinken (3) angeordnet ist.

7. Maschine nach Anspruch 1 oder dem vorstehenden Anspruch, **dadurch gekennzeichnet, dass** die Gelenke des Zugelements (105) an der Zinke (2) und am Rahmen, das Gelenk der Zinke (2) an dessen Arm (5) und das Gelenk des Arms (5) am Rahmen entsprechend der Ecken eines verformbaren Vierecks eingerichtet sind.

8. Maschine nach einem der Ansprüche 1 oder 6 oder 7, **dadurch gekennzeichnet, dass** die Haltestrebe (6) aus einem einfach wirkenden Hydraulikzylinder gebildet ist und mit einer Einrichtung zum Regeln und zur Begrenzung der Arbeitstiefe der Zinke (2) der ersten Art verbunden ist.

9. Maschine nach einem der Ansprüche 1 oder 6 bis 8, **dadurch gekennzeichnet, dass** der Arm (5), das Zugelement (105) und die Haltestrebe (6) am Rahmen (1) jeweils durch ein Kugelgelenk angelenkt sind und dass der Arm (5) mit dem Rahmen durch zwei seitliche, in Dreiecksform angeordnete Haltestreben (110,120) fest verbunden ist, wobei die Haltestreben zum Rahmen hin aufeinander zulaufen.

10. Maschine nach dem vorstehenden Anspruch, bei der die Längsträger (100a), (100b) des Rahmens 1 drei Organe (101), (103) zur Befestigung an der rückseitigen 3-Punkte-Ankopplung eines Zugfahrzeugs umfassen, nämlich ein oberes Organ (101) und zwei untere Organe (102), **dadurch gekennzeichnet, dass** die beiden unteren Organe (102) entlang einer zu den Längsträgern des Rahmens senkrechten Achse bezüglich ihrer Position einstellbar sind.

11. Maschine nach Anspruch 9 oder Anspruch 10, **dadurch gekennzeichnet, dass** die seitlichen Haltestreben (110,120) bezüglich der Länge einstellbar sind.

12. Maschine nach Anspruch 10, **dadurch gekennzeichnet, dass** die seitlichen Haltestreben (110), (120) unveränderliche Längen haben und dass die Position ihres gemeinsamen Kugelgelenks entlang dem oberen Längsträger (100a) einstellbar ist.

13. Maschine nach dem vorstehenden Anspruch, **dadurch gekennzeichnet, dass** die verschiedenen gemeinsamen Kugelgelenke an einer und derselben horizontalen Steuerstange (170) befestigt sind, welche entlang des Längsträgers (100a) verschiebbar gelagert ist und an einem Betätigungs-Antriebsorgan befestigt ist, welches das Verlagern entlang des Längsträgers (100a) in die eine oder die andere Richtung gewährleistet, um die Zinken entweder nach links oder nach rechts neigen zu können.

14. Maschine nach dem vorstehenden Anspruch, **dadurch gekennzeichnet, dass** das Betätigungs-Antriebsorgan der Steuerstange (170) und das Betätigungs-Antriebsorgan (160) der Organe (102) miteinander verbunden sind, sodass die Aktivierung des einen die Aktivierung des anderen bewirkt, und dass die Verlagerung der Organe (102) und die Neigung einer durch diese Organe (102) verlaufenden geometrischen Achse AA von einer Neigungsbewegung der Arme (5) derart begleitet ist, dass letztere und die Achse stets rechtwinklig zueinander stehen.

15. Maschine nach einem der vorstehenden Ansprüche, **dadurch gekennzeichnet, dass** der aktive Bereich (20) der Zinke der ersten Art eine Schar mit trapezförmiger , Außenkontur ist und dass diese Schar eine bewegliche frontale Vorderkante aufweist, die durch eine schräge seitliche bewegliche Kante verlängert ist.
